# EUROPEAN PATENT APPLICATION

(11) **EP 0 997 895 A2**
(43) Date of publication of application: **03.05.2000**
(21) Application number: 99308070.4
(22) Date of filing: 13.10.1999
(51) Int. Cl.: G11B 15/07

(54) **Information recording apparatus and information recording system thereof**

(30) Priority: 19.10.1998 JP 29647598
(71) Applicant: VICTOR COMPANY OF JAPAN, LIMITED, Yokohama-Shi Kanagawa-Ken 221 (JP)
(72) Inventor: Hara, Mitsuhiko, Yokohama, Kanagawa-ken (JP)
(74) Representative: Butcher, Ian James

(57) **Abstract**

The VTR (video tape recorder) 5 outputs an identification (ID) information indicating that a GO cassette is loaded when the G0 cassette has been loaded, and outputs an ID information indicating that a G1 or G2 cassette is loaded when the G1 or G2 cassette has been loaded other than the ID information, which indicates that a GO cassette has been loaded.

## Description

### BACKGROUND OF THE INVENTION

### Field of the Invention:

The present invention relates to an information recording apparatus and an information recording system, which identify classification of a recording medium utilized for recording information signals and record the information signals in accordance with a result of the identification of the recording medium.

### Description of the Related Art:

There provided such a video tape recorder (VTR), which can record information signals after identifying a format of recording the information signals, as a VTR of recording and reproducing information signals. Various kinds of recording cassettes are provided in order to comply with a plurality of formatted signals. The VTR detects whether or not a cassette identification (ID) hole provided on a housing of a cassette to be recorded is presented.

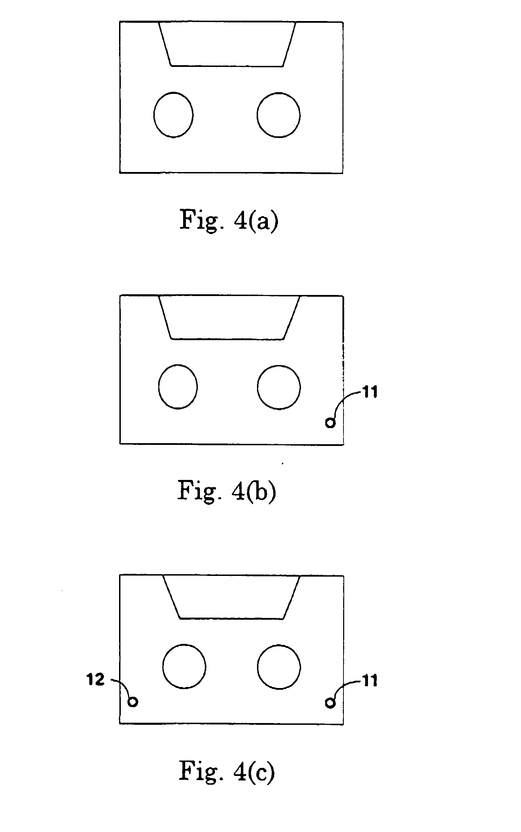

Figs. 4(a) through 4(c) show 3 types of cassettes for recording utilized for such a VTR mentioned above. Fig. 4(a) shows a G0 cassette, which is in response to the G0 format for recording analog video signals and is not provided with a cassette ID hole. Fig. 4(b) shows a G1 cassette, which is in response to the G1 format having wider bandwidth of recording signals than that of the G0 format in video signals and is provided with one cassette ID hole 11. Fig. 4(c) shows a G2 cassette, which is in response to the G2 format for recording digital video signals and is provided with 2 cassette ID holes 11 and 12.

The G1 format is upward compatible with the G0 format. The G2 format is upward compatible with the G1 format as well as the G0 format. In other words, a G0 cassette can record only a signal of the G0 format and a G1 cassette can record signals of both the G1 and the G0. In a case of a G2 cassette, any signals of any format can be recorded.

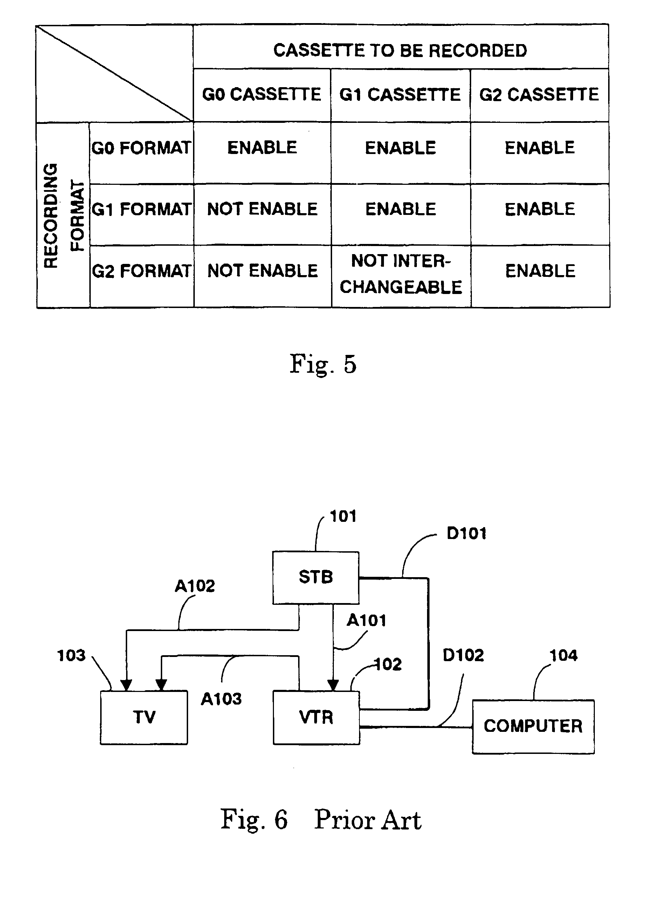

A G1 cassette has a most suitable characteristic for recording signals of the G1 format. A G2 cassette is in a higher grade of quality than that of a G1 cassette and has a most suitable characteristic for recording digital signals of the G2 format. In a case that a G1 cassette is recorded with signals of the G2 format, compatibility of reproduced signals is not assured. Fig. 5 shows a relation between these cassettes to be recorded and recording formats.

A VTR is provided with cassette ID switches, which are allocated in positions facing toward the cassette ID holes provided on a G1 and G2 cassettes. Such a VTR can detect a format, which can record video signals on a cassette, when the cassette is loaded.

Fig. 6 shows an exemplary diagram of connecting such a VTR 2 with peripheral equipment by way of serial buses A101 through A103 comply with the IEEE 1394 standard and digital interfaces D101 and D102 such as SCSI (Small Computer System Interface). In Fig. 6, a set top box (STB) 101 receives a digital broadcasting through an antenna (not shown) and transfers broadcasting signals in digital to a VTR 102 through the D101 and also outputs analog signals to the VTR 102 through the A101 and to a TV 103 through the A102 with decoding the digital broadcasting signals by a decoder built in the STB 101.

The VTR 102 records digital or analog signals outputted from the STB 101 in accordance with a format of a cassette to be recorded. The TV 103 is a television receiver for displaying pictures in analog signal outputted from the STB 101 through the A102 or the VTR 102 through the serial bus A103. In addition thereto, a computer 104 is connected to the VTR 102 by way of the digital interface D102 and the VTR 102 can be utilized as an external memory equipment for the computer 104.

As shown in Fig. 6, the STB 101, the VTR 102 and the computer 104 are connected by way of the digital interfaces D101 and D102. Information indicating conditions of these apparatuses are managed by a center unit, which is assigned in the STB 101. In other words, the center unit outputs information about a type of a cassette to the STB 101 when the cassette is loaded into the VTR 102 with detecting a cassette ID hole of the cassette. Accordingly, signals can be recorded with an appropriate format in response to a type of a cassette loaded into the VTR 102.

A VTR, which does not detect a cassette ID hole provided exclusively for a G2 cassette, has been introduced into a market in order to reduce cost of the VTR by eliminating a number of switches for detecting cassette ID holes.

Such a VTR identifies even a G2 cassette loaded as a G1 cassette because the cassette ID hole provided exclusively for a G2 cassette is not detected. Thus, in a case that a digital broadcasting received by the STB 101 is recorded by the VTR 102, the VTR 102 records an analog signal from the STB 101 by the G1 format with identifying a cassette loaded as a G1 cassette even though a G2 cassette is loaded into the VTR 102.

On the other hand, in a case that the VTR 102 is utilized as an external memory equipment for the computer 104, the computer 104 dose not output any data because the VTR 102 outputs information indicating that a G1 cassette is loaded although a G2 cassette is actually loaded. Accordingly, the VTR 102 can not record the data from the computer 104 under this condition.

### SUMMARY OF THE INVENTION

Accordingly, in consideration of the above-mentioned problems of the prior art, an object of the present invention is to provide an information recording apparatus and an information recording system thereof, which output information indicating that a G0 cassette is loaded when the G0 cassette has been loaded to an external equipment connected by way of a digital interface. Further, they output information indicating that a G1 or G2 cassette is loaded when the G1 or G2 cassette has been loaded.

In order to achieve the above object, the present invention provides, according to an aspect thereof, an information recording apparatus, which can transmit a control signal in conjunction with an information signal bi-directionally to/from other equipment or apparatuses connected by way of a digital interface, the information recording apparatus can record a signal by a predetermined format in response to a cassette, which is selected one out of a first cassette of recording a signal of a first format, a second cassette provided with a first identification (ID) hole for recording a signal of a second format and a third cassette provided with the first ID hole and a second ID hole for recording a signal of a third format, the information recording apparatus comprising an ID switch for detecting the first ID hole, and the information recording apparatus further characterized by that an ID information indicating that the first cassette is loaded is outputted through the digital interface, in case that the first ID hole is not detected, and by that another ID information indicating that one cassette out of the first and second cassettes is loaded is outputted, in case that the first ID hole is detected.

According to another aspect of the present invention, there provided an information recording system, which can transmit a control signal in conjunction with an information signal bi-directionally to/from other equipment or apparatuses connected by way of a digital interface, wherein at least an information recording apparatus and an information outputting apparatus are connected to the digital interface, the information recording system can record a signal by a predetermined format in response to a cassette, which is selected one out of a first cassette of recording a signal of a first format, a second cassette provided with a first identification (ID) hole for recording a signal of a second format and a third cassette provided with the first ID hole and a second ID hole for recording a signal of a third format, the information recording system comprising an ID switch for detecting the first ID hole, and the information recording system further characterized by that an ID information indicating that the first cassette is loaded is outputted through the digital interface, in case that the first ID hole is not detected, and by that another ID information indicating that one cassette out of the first and second cassettes is loaded is outputted, in case that the first ID hole is detected, and by that the information outputting apparatus further controls output of an information signal in accordance with an ID information outputted by the information recording apparatus.

Other object and further features of the present invention will be apparent from the following detailed description when read in conjunction with the accompanying drawings.

### BRIEF DESCRIPTION OF DRAWINGS

Fig. 1 is an exemplary connection diagram, wherein peripheral equipment are connected by way of a digital interface to an information recording apparatus according to an embodiment of the present invention.

Fig. 2 shows cassette ID (identification) information outputted from the VTR 5 shown in Fig. 1.

Fig. 3 shows cassette ID information outputted from the VTR 6 shown in Fig. 1.

Fig. 4(a) shows a configuration and classification of a G0 cassette for recording a signal of the G0 format utilized by a VTR.

Fig. 4(b) shows a configuration and classification of a G1 cassette for recording a signal of the G1 format utilized by a VTR.

Fig. 4(c) shows a configuration and classification of a G2 cassette for recording a signal of the G2 format utilized by a VTR.

Fig. 5 shows a table of showing relations between a cassette to be utilized and a recording format.

Fig. 6 is an exemplary connection diagram, wherein peripheral equipment is connected by way of a digital interface to an information recording apparatus according to the prior art.

### DETAILED DESCRIPTION OF THE PREFERRED EMBODIMENTS

### [Embodiment]

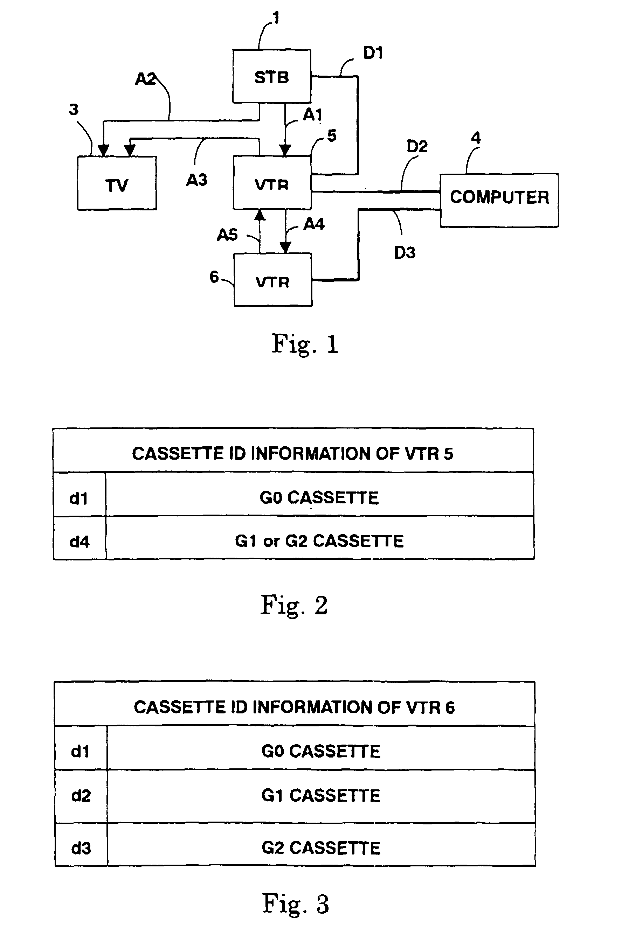

Fig. 1 is an exemplary connection diagram, wherein peripheral equipment are connected by way of a digital interface to an information recording apparatus according to an embodiment of the present invention. In Fig. 1, a total information recording system comprises a set top box (STB) 1, a television receiver (TV) 3, a computer 4, a video tape recorder (VTR) 5 without a cassette ID (identification) switch for a G2 cassette and a VTR 6 with a cassette ID switch for a G2 cassette. Further, they are connected each other by way of digital interfaces D1 through D3 and analog serial buses A1 through A5 so as to transmit or receive data to/from each other freely. The STB 1 receives a digital broadcasting through an antenna (not shown) and transmits digital signals of the digital broadcasting to the VTR 5 through the digital interface D1. The STB 1 further decodes digital signals of a digital broadcasting into analog signals by a built-in decoder and transmits the analog signals to the VTR 5 through the analog bus A1 or to the TV 3 through the analog bus A2.

The VTR 5 is connected to the computer 4 through the digital interface D2 and transmits analog signals to the TV 3 through the analog bus A3. Further, the VTR 5 transmits or receives analog signal to/from the VTR 6 through the analog bus A4 or A5. In addition thereto, the VTR 5 is not equipped with a cassette ID switch for detecting a cassette ID hole provided on a G2 cassette although it is equipped with a cassette ID switch for detecting a cassette ID hole provided on a G1 cassette.

On the other hand, the VTR 6 is connected to the computer 4 through the digital interface D3. Further, the VTR 6 receives analog signal from the VTR 5 through the analog bus A4 or transmits analog signal to the VTR 5 through the analog bus A5. Furthermore, the VTR 6 is equipped with cassette ID switches for detecting 2 cassette ID holes provided on a G2 cassette.

Fig. 2 shows cassette ID information outputted from the VTR 5 in accordance with a cassette loaded into the VTR 5 and Fig. 3 shows cassette ID information outputted from the VTR 6 in accordance with a cassette loaded into the VTR 6. All information indicating statuses of all equipment or apparatuses connected through digital interfaces or analog buses and including these cassette ID information are managed by the STB 1 assigned as a center unit.

In case that a G2 cassette is loaded into the VTR 5, the VTR 5 identifies that a G1 or G2 cassette has been loaded and outputs the cassette ID information of "d4" as shown in Fig. 2. Accordingly, the VTR 5 can record a digital broadcasting, which is received by the STB 1 and transmitted to the VTR 5 through the digital interface D1, by the G2 format. Further, the VTR 5 can record data, which are outputted from the computer 4 to the VTR 5 as the external memory equipment, by the G2 format.

Further, in case that a G1 cassette is loaded into the VTR 5, the VTR 5 identifies that a G1 or G2 cassette has been loaded and outputs the cassette ID information of d4 as shown in Fig. 2. In this case, the VTR 5 can record a digital broadcasting in the G2 format and also can record data from the computer 4 in the G2 format. However, in case that a G1 cassette is recorded with signals of the G2 format, compatibility of reproduced signals is not assured.

Furthermore, in case that a G0 cassette is loaded into the VTR 5, the VTR 5 identifies that a G0 cassette has been loaded and outputs the cassette ID information of d1 as shown in Fig. 2. Accordingly, the VTR 5 records analog signals outputted from the STB 1 in the G0 format. The computer does not output data, therefore the VTR 5 can not record the data.

On the other hand, in case that a cassette is loaded into the VTR 6, the VTR 6 can record signals in an appropriate format in accordance with a type of cassette loaded because the VTR 6 outputs only one cassette ID information out of 3 cassette ID information such as "d1", "d2" or "d3",

Subsequently, communications of control signals through a digital interface are depicted while the VTR 5 records information. At first, one of equipment or apparatuses connected by way of a digital interface is designated as a center unit at random when a power is turned on. Hereinafter the STB 1 is assumed to be designated as a center unit.

In case that a G2 cassette is loaded into the VTR 5 under the above-mentioned condition, the VTR 5 transmits the cassette ID information of "d4" as shown in Fig. 2 to the STB 1 as the center unit. The STB 1 informs an audience that a cassette has been loaded into the VTR 5 through the TV 3. It is possible to indicate on the screen of the TV 3 a type of cassette inserted into the VTR 5 or information such that what kind of signal can be recorded by the cassette loaded.

The audience can record a digital broadcasting received by the STB 1 in the G2 format or record data from the computer 4 in the G2 format in accordance with the information indicated on the screen of the TV 3. In case that the audience directs to record the data from the computer 4 in the G2 format, for example, the computer accesses to the STB 1 and inquires whether or not a cassette being able to record is loaded into the VTR 5.

Since the STB 1 holds the cassette ID information "d4" outputted from the VTR 5 as information about an external equipment connected to the STB 1, the STB 1 outputs the cassette ID information "d4" to the computer 4. The computer 4 transmits data to the VTR 5 after the computer 4 has confirmed that the VTR 5 has been ready to record the data from the computer 4. Then the VTR 5 records the data from the computer 4.

Further, in case that an audience directs to record a digital broadcasting in the G2 format while a G0 cassette has been loaded into the VTR 5, the STB 1 confirms a type of cassette loaded into the VTR 5 in accordance with information, which are managed inside the STB 1.

In this case, since the STB 1 holds the cassette ID information "d1", the VTR 5 can not record the data in the G2 format. Accordingly, a message such that it is impossible to record by the G2 format or a G0 cassette shall be loaded can be displayed on the TV 3.

On the other hand, in case of loading a cassette into the VTR 6, the VTR 6 outputs one of the cassette ID information shown in Fig. 3 to the STB 1. The cassette ID information is maintained in the STB 1 and is referred when the VTR 6 records information.

While the invention has been described above with reference to the embodiment thereof, it is apparent that many changes, modifications and variations in the arrangement of equipment and devices can be made without departing from the invention concept disclosed herein. For example, it is explained above such that all equipment or apparatuses connected by way of the digital interfaces are turned on. However, it is not necessary to turn on all the equipment or apparatuses connected by way of the digital interfaces so far as they actually input or output signals or data. In case of making the VTR 5 record data from the computer 4, for instance, it is not necessary to turn the STB 1 on. In this case, the computer 4 functions as a center unit.

According to the aspect of the present invention, the information recording apparatus outputs a cassette ID information, which indicates that a first cassette has been loaded, in case that a first cassette ID hole has not been detected. In case that the first cassette ID hole is detected, since a cassette ID information indicating that one of the first and a second cassettes is loaded is outputted, it is possible to record signal in an appropriate format without providing a detection switch for detecting the second cassette ID hole.

## Claims

1. An information recording apparatus, which can transmit a control signal in conjunction with an information signal bi-directionally to/from other equipment or apparatuses connected by way of a digital interface, said information recording apparatus can record a signal by a predetermined format in response to a cassette, which is selected one out of a first cassette of recording a signal of a first format, a second cassette provided with a first identification (ID) hole for recording a signal of a second format and a third cassette provided with the first ID hole and a second ID hole for recording a signal of a third format, said information recording apparatus comprising an ID switch for detecting said first ID hole, and
said information recording apparatus further characterized by that an ID information indicating that the first cassette is loaded is outputted through said digital interface, in case that said first ID hole is not detected, and by that another ID information indicating that one cassette out of said first and second cassettes is loaded is outputted, in case that said first ID hole is detected.

2. An information recording system, which can transmit a control signal in conjunction with an information signal bi-directionally to/from other equipment or apparatuses connected by way of a digital interface, wherein at least an information recording apparatus and an information outputting apparatus are connected to said digital interface, said information recording system can record a signal by a predetermined format in response to a cassette, which is selected one out of a first cassette of recording a signal of a first format, a second cassette provided with a first identification (ID) hole for recording a signal of a second format and a third cassette provided with the first ID hole and a second ID hole for recording a signal of a third format, said information recording system comprising an ID switch for detecting said first ID hole, and
said information recording system further characterized by that an ID information indicating that the first cassette is loaded is outputted through said digital interface, in case that said first ID hole is not detected, and by that another ID information indicating that one cassette out of said first and second cassettes is loaded is outputted, in case that said first ID hole is detected, and by that said information outputting apparatus further controls output of an information signal in accordance with an ID information outputted by said information recording apparatus.
